# NEUE EUROPÄISCHE PATENTSCHRIFT

(11) **EP 0 548 740 B2**
(45) Veröffentlichungstag und Bekanntmachung des Hinweises auf die Entscheidung über den Einspruch: **01.03.2000**
(45) Hinweis auf die Patenterteilung: 05.03.1997
(21) Anmeldenummer: 92121289.0
(22) Anmeldetag: 15.12.1992
(51) Int. Cl.: C09J 4/06, C08F 265/06

(54) **Lichthärtbarer Polymerisationskleber auf Methylmethacrylat-Basis**
Light-currable polymeric adhesive based on methylmethacrylate
Adhésif photodurcissable à base de méthylméthacrylate

(30) Priorität: 21.12.1991 DE 4142681
(43) Veröffentlichungstag der Anmeldung: 30.06.1993
(73) Patentinhaber: Röhm GmbH, 64293 Darmstadt (DE)
(72) Erfinder: Blumenschein, Michael, W-6140 Bensheim 1 (DE); Müller, Michael, Dr., W-6140 Bensheim 3 (DE)

(56) Entgegenhaltungen:
- EP-A- 0 497 157
- DE-A- 1 769 476
- DE-A- 3 542 517
- DE-A- 4 000 171
- GB-A- 2 165 255
- GB-A- 2 216 136
- BASF AG Technische Information "LUCIRIN TPO", August 1989
- CIBA-GEIGY Technische Information "DAROCUR 1173", Januar 1992 und "IRGACURE 184", September 1987
- Encyclopedia of Polymer Science and Engineering, vol. 11, 1988, S. 191-201

## Beschreibung

Die Erfindung betrifft einen lichthärtbaren Polymerisationskleber auf Methylmethacrylat-Basis und dessen Verwendung als Klebmittel für Formkörper aus Acrylkunststoff und zum Verkleben eines Formkörpers aus Acrylkunststoff mit einem Formkörper aus einem anderen Kunststoff oder einem anderen Material.

### Stand der Technik

Lichthärtbare Systeme auf Methylmethacrylat-Basis, die neben der monomeren Methylmethacrylatverbindung und gegebenenfalls weiteren (Meth)acrylmonomeren noch polymere (Meth)acrylate, insbesondere Polymethylmethacrylat enthalten, sind bekannt. So beschreibt die US 3 616 367 Systeme aus Methylmethacrylat/Polymethylmethacrylat, die vorallem im Extruder zu Platten extrudiert und mit UV-Licht in Gegenwart von Photoinitiatoren, so vor allem mit Benzoin gehärtet, d.h. auspolymerisiert werden.

Auch Klebmittel zum Verkleben von Formteilen aus Acrylkunststoff mit den Komponenten Methylmethacrylat, Polymethylmethacrylat und Photoinitiator sind bekannt. Ein solches lichthärtbares Klebmittel mit Diisopropylxanthogendisulfid als UV-Lichtinitiator ist unter der Bezeichnung "Acrifix® 92" (Warenzeichen der Röhm GmbH) im Handel. Ein gegenüber Acrifix® 92 verbessertes lichthärtbares Klebmittel, das zusätzlich noch 1 bis 20 Gew.-% eines vernetzenden, mehrfunktionellen Acryl- und/oder Methacrylmonomeren enthält, ist in der DE 40 00 171 A1 beschrieben. Eine gegenüber Acrifix® 92 relativ schnelle Härtung wird durch UV-Bestrahlung in Gegenwart von beispielsweise Benzildimethylketal als UV-Photoinitiator erreicht.

Aus der DE-OS 29 09 993 sind lichthärtbare Form-, Tränk- und Überzugsmassen auf Basis von Monomeren mit ungesättigten Polyesterharzen, urethanmodifizierten ungesättigten Polyesterharzen und ungesättigten Vinylesterharzen, die als UV-Sensibilisatoren Arylphosphinoxid-Verbindungen oder diese in Kombination mit aromatischen Ketonen, wie z.B. Benzilketalen und aromatischen Disulfiden enthalten.

Die DE-OS 36 19 792 beschreibt Materialien für die Herstellung von Photoresistschichten, die aus photopolymerisierbaren ungesättigten organischen Verbindungen, gegebenenfalls einem polymeren Binder, weiter aus Photopolymerisationsinitiator, einem Farbbildner mit einem photooxidierenden Agens, wie einem Acylphosphinoxid, und weiteren Zusätzen bestehen. Polymerisierbare ungesättigte Verbindungen sind u.a. Diacrylate und Triacrylate und als Farbbildner ist Michlers Keton genannt.

In Polym. Paint Colour J., 175 (4150), 636-8, 640 (1985) wird über Arylphosphinoxide, eine neue Klasse von UV-Initiatoren, insbesondere über 2,4,6-Trimethylbenzoyldiphenylphosphinoxid als UV-Initiator, u.a. für Acrylatlacke zur Herstellung von Beschichtungen, berichtet.

Mit sichtbarem Licht, d.h. mit Licht von Wellenlängen größer 400 nm, härtbare Systeme, die allgemein ein oder mehrere (Meth)acrylatmonomere enthalten, verwenden gewöhnlich 2,3-Bornandion (Campherchinon) in Kombination mit einem organischen Amin als Photoinitiatorsystem. 2,3-Bornandion absorbiert Licht im Wellenlängenbereich von 420 bis 460 nm. Im dabei angeregten Tripletzustand des Diketons bildet sich mit dem Amin ein zur Polymerisationsauslösung befähigtes Ionenradikal. Solche Systeme werden in Dentalmassen oder auch in Klebern, die polymfunktionelle Acrylmonomere und Polymere wie Elastomere bzw. polyfunktionelle aliphatische Urethanacrylate enthalten, zur Verbindung von Polycarbonat-Formstücken angewendet (GB 2 216 136 A).

### Aufgabe und Lösung

Der Erfindung liegt die Aufgabe zugrunde, die bekannten Klebmittel für Acrylkunststoffe auf Methylmethacrylat-Basis auch mit Lichtquellen, die praktisch nur visuelles Licht, d.h. solches mit Wellenlängen größer 400 nm d.h. Tagesucht aussenden, wobei insbesondere Licht mit Wellenlängen von 400 bis 500 nm mit vorhanden sein muß, zu photopolymerisieren.

Es wurde gefunden, daß Klebmittel für Formkörper aus Acrylkunststoffen, die im wesentlichen aus Methylmethacrylat und einem Methylmethacrylat-Polymeren bestehen mit Tageslicht härtbar sind, wenn das Klebmittel einen Photoinitiator I enthält, der mindestens eine Absorptionsbande im Wellenlängenbereich von 340 bis 500 nm aufweist, in Kombination mit anderen Photoinitiatoren mit mindestens einer Absorptionsbande zwischen 340 und 500 nm, und zwar solchen, die durch Licht des Wellenlängenbereichs der maximalen Emission gängiger UV-Leuchtstoffröhren von ca. 300 bis ca. 400 um angeregt werden - Photoinitiatoren II.

Beispiele für Photoinitiatoren, die in dem System Methylmethacrylat-Monomer/Polymer aufgebaut mit Methylmethacrylat, eine Tageslicht-initiierte Aushärtung bewirken, sind Acyldiphenylphosphinoxide, insbesondere 2,4,6-Trimethylbenzoyl-diphenylphosphinoxid, als Lucirin® TPO (BASF) im Handel oder 2,3-Bornandion, auch als Campherchinon bzw. als Camphorquinone bekannt. 2,4,6-Trimethylbenzoyl-diphenylphosphinoxid zeigt neben einem im nahen UV bei 300 nm ausgeprägten Absorptionsmaximum ein zwischen 340 und 420 nm breites, aber mit relativ geringer Extinktionshöhe liegendes Absorptionsgebiet.

Beispiele für Photoinitiatoren II sind Diisopropylxanthogendisulfid mit einem Absorptionsbereich von ca. 300 bis 380 nm oder ein Ketonderivat der allgemeinen Formel 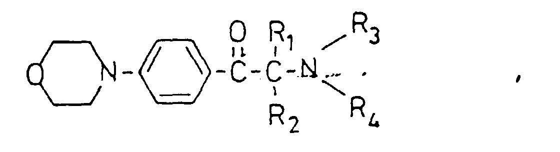 wie beispielsweise Irgacure® 369, das einen breiten UV-Absorptionsbereich von kleiner 260 nm bis in den sichtbaren Bereich von ca. 430 nm besitzt.

Photoinitiatoren I und Photoinitiatoren II zeichnen sich dadurch gegeneinander aus, daß ihre Absorptionsmaxima im Wellenlängenbereich von 340 bis 500 nm bei verschiedenen Wellenlängen liegen.

Eine Initiierung der Polymerisationsverklebung mit einer Kombination von Photoinitiator I und Photoinitiator II ist insbesondere zur Herstellung von hochwertigen Verklebungen angezeigt, wie z.B. Kehlnahtverklebungen für die Erzeugung hochwertiger Bauteile, die frei von Schrumpfblasen sein müssen.

Spektroskopische Messungen an der Initiatorkombination von Lucirin® TPO (Photoinitiator I) und Diisopropylxanthogendisulfid (Photoinitiator II) zeigen, daß diese Kombination der Initiatoren gegenüber Lucirin® alleine, insbesondere im Emissionsbereich der oben angesprochenen UV-Leuchtstoffröhren (z.B. UV-LS-Röhre TL 09, Solarium), deutlich stärker absorbiert.

Damit zeigt sich ein weiterer Vorteil der Erfindung, nämlich eine deutlich reduzierbare UV-Belastung beim Arbeiten mit der Kombination Photoinitiator I und Photoinitiator II. Beim Arbeiten mit der Kombination I und II muß diese deutlich im langwelligen Bereich, d.h. im Bereich größer 380 - 400 nm absorbieren, um Aushärtung mit Tageslichtröhren bzw. Raumlicht, auch natürlichem, zu erlauben. Diese Aufgabe übernimmt der Tageslichtinitiator-Photoinitiator I. Durch Kombination der beiden Photoinitiatortypen steht dem Verarbeiter eine breite Auswahl von Lampentypen, die für die Aushärtung geeignet sind zur Verfügung.

Die Erfindung betrifft:
Lichtbärtender Polymerisationsklebstoff für Acrylglas, bestehend aus einer Lösung eines mit vorwiegend aus Methylmethacrylat aufgebauten Polymeren in polymerisierbarem Monomeren, das im wesentlichen Methylmethacrylat ist,
   dadurch gekennzeichnet,
daß der Anteil des Methylmethacrylat-Polymeren zwischen 20 - 60 Gew.-% bezogen auf das Gewicht des Klebmittels liegt, der Anteil des Methylmethacrylat-Polymeren zusammen mit flüssigem, monomeren Methylmethacrylat am Klebmittel wenigstens 80 Gew.-% ausmacht, und das klebmittel bis 7 Gew.-% eines vernetzenden mehrfunktionellen Monomeren enthält und
zur Photopolymerisationsauslösung eine Kombination mindestens eines Tageslicht-Photoinitiators in Mengen von 0,01 bis 10 Gew.-%, der mindestens eine Absorptionsbande im Wellenlängenbereich von 340 - 500 nm aufweist, und eines Photoinitiators II enthält, der mindestens eine Absorptionsbande im selben Wellenlängenbereich aufweist, wobei die Absorptionsmaxima der Absorptionsbanden der beiden Photoinitiatoren in diesem Wellenlängenbereich bei verschiedenen Wellenlängen liegen.

Die bevorzugte Kombination aus Photoinitiator I und Photoinitiator II besteht aus 2,4,6-Trimethylbenzoyldiphenylphosphinoxid und Diisopropylxanthogendisulfid

### Durchfuhrung der Erfindung

Das Klebmittel hat vorzugsweise eine Viskosität im Bereich von 100 bis 5 000 mPa·s bei Raumtemperatur. Bei einer niedrigeren Viskosität besteht die Gefahr, daß das Klebmittel vor oder während der Bestrahlung aus der Klebfuge ausläuft. Bei einer höheren Viskosität wird die Anwendung schwieriger. Die geeignete Viskosität läßt sich durch Wahl der Art und Menge des gelösten Methylmethacrylat-Polymeren nach Belieben einstellen

Der Anteil des Methylmethacrylat-Polymeren liegt zwischen 20 und 60 Gew.-%, vor allem zwischen 20 und 40 Gew.-%, bezogen auf das Gewicht des Klebmittels. Das Molekulargewicht des Polymeren liegt in der Regel im Bereich von 10 000 bis 1 Million (Gew.-Mittelwert).

Das Methylmethacrylat-Polymere ist zu 40 bis 100 %, vorzugsweise 90 bis 100 % seines Gewichts aus Methylmethacrylat aufgebaut. Mögliche Comonomere sind z.B. Alkylacrylate mit 1 bis 8 Kohlenstoffatomen im Alkylrest oder Alkylmethacrylate mit 2 bis 8 Kohlenstoffatomen im Alkylrest, Acryl- und/oder Methacrylnitril, Styrol oder Vinylester von gesättigten Fettsäuren mit 2 bis 10 Kohlenstoffatomen. In untergeordneten Mengen, etwa bis zu 5 Gew.%, können Monomere mit funktionellen Gruppen, wie Acryl- und/oder Methacrylsäure, deren Hydroxyalkylester oder Aminoalkylester, am Aufbau des Methylmethacrylat-Polymeren beteiligt sein. Die Art und der Anteil der Comonomeren werden so gewählt, daß das Polymere in geeigneten organischen Lösungsmitteln sowie in Methylmethacrylat löslich ist; aus diesem Grund sind vernetzende Comonomere mit mehr als einer ethylenisch ungesättigten, radikalisch polymerisierbaren Gruppe ungeeignet.
Methylmethacrylat-Polymere aus 90 bis 100 Gew.-% Methylmethacrylat und zum verbleibenden Teil aus niederen Alkylacrylaten mit 1 bis 4 Kohlenstoffatomen im Alkylrest sind besonders geeignet.

Das Methylmethacrylat-Polymere macht zusammen mit flüssigem, monomerem Methylmethacrylat einen Anteil von wenigstens 80 Gew.-% des Klebmittels, vorzugsweise 90 bis 98 Gew.-% aus. Neben Methylmethacrylat können andere monoethylenisch ungesätligte, damit copolymerisierbare Monomere, wie solche, die als Comonomere für das Methylmethacrylat-Polymere genannt worden sind, einen begrenzten Teil, etwa bis zu 10 Gew.-% des gesamten Klebmittels ausmachen.

Das Klebmittel enthält vernetzende Monomere bis 7 Gew.-%, vorzugsweise 0,5 bis 5 Gew.-%, insbesondere 1 bis 3 Gew.-%, vor allem mehrfunktionelle Acryl- und/oder Methacrylmonomere enthalten. Als vernetzende Komponenten sind bifunktionelle, trifunktionelle Acryl- und/oder Methacrylmonomere und auch höherfunktionelle wie z.B. tetrafunktionelle Acryl- und/oder Methacrylmonomere bevorzugt einsetzbar. Vorzugsweise handelt es sich um Estertunktionen, insbesondere Acrylesterfunktionen. Geeignete mehrfunktionelle Acryl- und/oder Methacrylsäureester leiten sich von aliphatischen Polyhydroxyverbindungen mit wenigstens 2, vorzugsweise wenigstens 3 und besonders bevorzugt wenigstens 4 Hydroxygruppen und vorzugsweise 2 bis 6 Kohlenstottatomen ab. Beispiele sind Ethylenglykol, Propylenglykol, Butandiol-1,4, Hexandiol-1,6, Diethylenglykol, Triethylenglykol, Glycerin, Trimethylolpropan, Pentaerythrit, Tetramethylolethan, Sorbitan. Beispiele geeigneter Ester sind:

Glykol-diacrylat und -dimethacrylat, Butandioldiacrylat oder -dimethacrylat, Dimethylolpropandiacrylat oder -dimethacrylat, Diethylenglykoldiactylat oder -dimethacrylat, Divinylbenzol, Trimethylolpropan-triacrylat oder -trimethacrylat, Glycerin-triacrylat oder -trimethacrylat, Pentaerythrit-tetraacrylat oder -tetramethacrylat, 1,2,3,4-Butantetraol-tetraacrylat oder - tetramthacrylat, Tetramethylolethan-tetraacrylat oder - tetramethacrylat, 2,2-Dihydroxy-propandiol-1,3-tetraacrylat oder -tetramethacrylat, Sorbitan-tetra-, -penta- oder -hexa-acrylat oder die entsprechenden Methacrylate.
Es können auch Gemische von vernetzenden Monomeren mit zwei bis vier oder mehr ethylenisch ungesättigten, radikalisch polymerisierbaren Gruppen mitverwendet werden.

Als Photoinitiatoren werden dafür bekannte Verbindungen eingesetzt. Als Tageslicht-Photoinitiatoren oben benannte Verbindungen der Klasse der Acyldiphenylphosphinoxide, insbesondere Benzoyldiphenylphosphinoxide, vor vor allem 2,4,6-Trimethylbenzoyl-diphenylphosphinoxid oder 2,3-Bornandion.

Bevorzugte UV-Photoinitiatoren (Photoinitiatoren II) sind Diisopropylxanthogendisulfid oder Acetophenonverbindungen, wie z. B. Darocur® 1173 der Formel 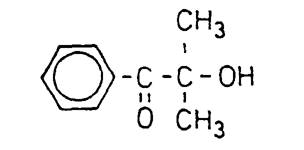 oder Irgacure® 369 und/oder Benzophenone oder Benzoine. Sie werden in üblichen Mengen eingesetzt, d.h. wenigstens 0,01 Gew.-% und vorzugsweise 0,1 bis 10 Gew.-%, insbesondere bis 1 Gew.-%, bezogen auf das Gewicht des Klebmittels.

Weitere übliche Zusätze können bei Bedarl mitverwendet werden, z.B. UV-Schutzmittel, UV-Absorber, Stabilisatoren, Amine zur Aufhebung der Sauerstoff inhibierung bei Verwendung von 2,3-Bornandion als Tageslicht-Initator, hochsiedende Weichmacher u.ä.

### Zur Verklebung geeignete Kunststoffe

Unter Acrylkunststoffen werden Polymerisate des Methylmethacrylats verstanden, die bis zu 50 Gew.-% aus anderen, damit radikalisch mischpolymerisierbaren Monomeren aufgebaut sein können. Vorzugsweise beträgt der Anteil des Methylmethacrylats 80 bis 100 Gew.-%. Als Comonomere kommen in erster Linie Alkylester der Acrylsäure mit 1 bis 4 Kohlenstoffatomen im Alkylrest sowie Acryl- und/oder Methacrylnitril, Styrol oder Maleinsäureanhydrid in Betracht. Bevorzugt sind thermoplastisch und thermoelastisch verformbare Acrylkunststoffe; ihre Viskositätszahl (nach DIN 53 727 bzw. 51 562, Teil 1) liegt vorzugsweise im Bereich von 20 bis 1 500 ml/g.

Die Formteile aus Acrylkunststoff können unter Verwendung des erfindungsgemäßen Klebmittels mit Formteilen aus anderen Kunststoffen, wie Hart-PVC, Celluloseestem, Polystyrol, ABS-Kunststoffen, Polycarbonat oder Polyethersulfon verklebt werden. Ihre Vicat-Erweichungstemperatur soll nicht unter 70 Grad C liegen. Hochvernetzte Kunststoffe, die weder thermoplastisch noch thermoelastisch verarbeitbar sind, sind weniger geeignet. Wenigstens einer der beteiligten Kunststoffe muß für die zur Aushärtung verwendete Strahlung ausreichend durchlässig sein, um in kurzer Zeit die Aushärtung bewirken zu können. Glasklare Kunststoffe sind bevorzugt. Mit besonderem Vorteil werden die erfindungsgemäßen Klebmittel zum Verkleben von Formteilen aus Acrylkunststoff miteinander verwendet.

Das erfindungsgemäße Klebmittel ist auch für die Verklebung von Acrylkunststoffen mit anderen nichtkunststoffartigen Materialien, wie beispielsweise Glas, Holz oder Metallen brauchbar.

### Das Klebverfahren

Zum Verkleben eines Formkörpers aus Acrylkunststoff mit einem anderen Formkörper aus Kunststoff wird eine Schicht des erfindungsgemäßen Klebmittels die mit den zu verklebenden Formkörpern in Berührung steht, unter der Einwirkung einer Strahlung, für die wenigstens einer der Formkörper durchlässig ist und die auf den Photoinitiator aktivierend wirkt, ausgehärtet.

In der Regel wird einer der zu verklebenden Kunststoffkörper mit einer Schicht des flüssigen Klebmittels beschichtet und mit dem anderen Kunststoffkörper möglichst blasenfrei zusammengefügt. Man kann auch die Teile trocken aneinanderfügen und das Klebmittel durch Kapillarkraft in die Klebfuge einziehen lassen. Die Klebstoffuge kann eine Dicke von etwa 1 Mikrometer bis zu mehreren Millimetern haben. Die aneinandergefügten Körper werden in der gewünschten Stellung fixiert und einer geeigneten Strahlung zur Härtung der Kleberschicht ausgesetzt. Der Ausschluß von Sauerstoff bzw. Luft ist in der Regel nicht erforderlich.

Als effektive Strahlungsquellen für die Sensibilisierung der Tageslicht-Initiatoren kommen Glühlampen und Röhren in Betracht, die Licht im Wellenlängenbereich von mindestens 400 bis 500 nm aussenden, z.B. Tageslicht LS-Röhre S25. Für die Polymerisationsauslösung mit der Kombination der Photoinitiatoren I und II können vorteilhafter auch UV-Lichtquellen verwendet werden, wie z.B. die UV-LS-Röhre TL09 oder die UV-LS-Röhre TL05 (Blaulichtröhren).

Die verwendete UV-Strahlung hat zweckmäßig im Bereich von 300 bis 400 nm ein Leistungsmaximum. Weitere geeignete Strahlungsquellen sind Schwarzlicht-Leuchtstofflampen, Quecksilberdampfstrahler, UV-Laser und dergl. mit einer Leistung von etwa 4 bis 2 000 Watt. Vorteilhaft ist eine Strahlungsleistung von mindestens 10 mWatt/qcm. Ungefärbte, klar durchsichtige Acrylkunststoffe haben eine ausreichende Durchlässigkeit für UV-Strahlung, so daß sie eine schnelle Härtung gestatten. UV-Lichtquellen mit hohem Anteil an Strahlung im Wellenlängenbereich 400 bis 500 nm genügen auch als Quellen zur Lichthärtung mit der Photoinitiatorkombination I und II.

Das Klebmittel in der Klebfuge härtet bei einer Temperatur im Bereich von 0 bis 80 Grad C am besten aus. Höhere Temperaturen können zur Verdunstung flüchtiger Bestandteile, niedrige Temperaturen zu längeren Härtungszeiten führen. Die Klebfuge härtet unter günstigen Bedingungen innerhalb von 8 bis 15 min vollständig aus. Die Härtung kann länger dauern, wenn das Strahlungsspektrum der Strahlungsquelle nicht mit dem Absorptionsspektrum des Initiators übereinstimmt oder wenn die Leistung der Strahlungsquelle gering ist. Auch mit diffusem Raumlicht gelingt innerhalb von ca. 60 bis 80 Minuten vollständige Härtung. Eine Behinderung durch Luftsauerstoff wird im allgemeinen nicht beobachtet. Selbst freiliegende Teile der Kleberschicht härten schnell und klebfrei aus. Die gehärtete Klebschicht weist noch Restmonomergehalte von ca. 3 bis 6 Gew.-% aus.

Nach Abschluß der Bestrahlung kann der verklebte Formkörper sofort weiterverarbeitet werden. Die erfindungsgemäß erzeugte Verklebung genügt höchsten Ansprüchen an Belastbarkeit und Witterungsbeständigkeit. Eine anschließende Temperung kann von Vorteil sein. Die Klebfestigkeil ist hoch, wie es für einen Polymerisationskleber auf Basis Methylmethacrylat/Polymethylmethacrylat zu erwarten ist: Monomeres quillt in die zu verklebenden AcrylglasOberflächen ein. Bei der Polymerisation der Klebnaht entsteht so durch Verschlaufung und Pfropfung ein homogener Materialverbund. Die optischen Eigenschaften der Klebnaht sind optimal: Sie weist bei Auswahl geeigneter Initiatoren keinen Gelbstich auf und härtet sowohl bei Kehlnaht- wie bei Stumpf-Stoß-Verklebung blasenfrei aus.

Die hohe Schlagzähigkeit und Zugscherfestigkeit der gehärteten Klebfuge gestattet es, den verklebten Formkörper wie ein einstückiges Formteil zu bearbeiten, z.B. durch Sägen, Fräsen, Bohren, Schleifen oder durch thermoelastische Umformung, wenn die verklebten Formkörper selbst einer solchen Bearbeitung zugänglich sind.

### BEISPIELE

### Beispiel 1 (nicht erfindungsgemäß)

### Herstellung eines Polymerisationsklebers

In einen 2 l-Rundkolben aus Braunglas mit Säbelrührer und Rückflußkühler werden 67,57 g Methylmethacrylat (MMA) eingefüllt. Nach Zugabe von 0,03 g 4-Methyl-2,6-di-tert.-butylphenol und 32 g Polymethylmethacrylat (PMMA)-Formmasse (Plexiglas® γ7N) wird unter Rühren auf 40 Grad C erwärmt und solange gerührt, bis sich das Polymere vollständig gelöst hat. Das dauert etwa 5 Stunden. Danach wird die Lösung abgekühlt und bei einer Temperatur unter 25 Grad C und unter Lichtausschluß werden 0,4 g des Photoinitiators Lucirin® TPO (BASF) Zugegeben und eingerührt.
Der resultierende Polymerisationskleber hat eine Viskosität von 1 840 mPa s (25 Grad C)

### Beispiele 2 - 4

### Herstellung von Polymerisationsklebern

Es wird verfahren wie in Beispiel 1 beschrieben. Abweichend von Beispiel 1 werden folgende Mengen an Methylmethacrylat und an Photoinitiatoren verwendet.

| Beispiel | MMA | Photoinitiatoren |
|---|---|---|
| 2 | 67,37 g | 0,2 g Lucirin® TPO + 0,4 g Diisopropylxanthogendisulfid |
| 3 | 67,17 g | 0,4 g 2,3-Bornandion + 0,4 g Diisopropylxanthogendisulfid |
| 4 | 67,17 g | 0,4 g Lucirin® TPO + 0,4 g Darocur® 1173 |

### Beispiel 5

In einem Rundkolben gemäß Beispiel 1 werden 73,73 g Methylmethacrylat eingewogen. Anschließend werden 0,03 g 4-Methyl-2,6-di-tert.-butylphenol und 25,6 g Plexiglas® γ7 N-Formmasse zugegeben. Nach 5 stündigem Rühren bei 40 Grad C wird die Mischung auf 25 Grad C abgekühlt und 0,32 g Lucirin® TPO und 0,32 g Diisopropylxanthogendisulfid werden eingerührt.

### Vergleichsbeispiel

Der Polymerisationskleber des Vergleichsbeispiels enthält nur einen Photoinitiator des Typs II. Der Vergleich mit den Beispielen 1 - 5 zeigt den erfindungsgemäßen Nutzen des Photoinitiators I auf die Aushärtezeit:
Wie in Beispiel 1 beschrieben, werden 67 g Methylmethacrylat in einem Kolben eingewogen und 0,05 g 4-Methyl-2,6-di-tert.-butylphenol und 32 g Plexiglas® γ7 N-Formmasse werden zugegeben. Nach 5 stündigem Rühren und Abkühlen auf 25 Grad C wird 1 g Diisopropylxanthogendisulfid zugegeben und eingerührt.
Der Polymerisationskleber hat eine Viskosität von 1 890 mPa s (25 Grad C).

### Bestimmung der Aushärtezeit

Die Bestimmung der Aushärtezeit erfolgt an einer Probeverklebung. Dazu werden zwei Platten aus 10 mm dickem gegossenem Acrylglas T-förmig miteinander verklebt. Die Kante der aufgesetzten Platte wurde zuvor angeschrägt, so daß eine V-förmige Klebnaht resultiert. Mit Hilfe eines Thermoelements in der Klebnaht wird die Zeit vom Beginn der Bestrahlung bis zum Erreichen des Temperaturmaximums ermittelt. Die so ermittelten Härtezeiten sind ein Maß für die Härtezeiten bei Verklebungen von Acrylglas.

| Klebmittel gemäß Beispiel | Aushärtezeit (min) | Lampentyp Lichtart |
|---|---|---|
| 1 | 12 | L25 |
| 2 | 18 | TL05 |
| 2 | 17 | TL09 |
| 2 | 19 | L25 |
| 3 | 23 | TL09 |
| 4 | 10 | TL09 |
| 4 | 18 | L25 |
| 5 | 32 | L25 |
| Vergleich 6 | 43 | TL09 |
| Vergleich 6 | 53 | L25 |

Bei den verwendeten Lampentypen handelt es sich um:
- TL05: Phillips Spezial-Leuchtstofflampe, superaktinisch Emission 310 - 470/ 550 nm
- TL09: Phillips Spezial-Leuchtstofflampe, blacklight Emission 305 - 450/550 nm
- L25: Phillips Weiß Universal 25 Emission 305 - > 700 nm

### Bestimmung der Kleb-Festigkeit

Die Klebfestigkeit wurde als Zugscherfestigkeit nach DIN 53 283 (ASTM 3163-73) an Probekörpern aus gegossenem Acrylglas bestimmt.

Es wurde das Klebmittel aus Beispiel 2 eingesetzt.

| Lampentyp Lichtart | Zugscherfestigkeit (MPa) | |
|---|---|---|
| | nach Verklebung | nach Tempern (5 Stunden/80 Grad C) |
| TL05 | 22 | 39 |
| TL09 | 28 | 51 |
| L25 | 30 | 54 |
| diffuses Raumlicht | 36 | 52 |

### Aushärtung von Verklebungen in diffusen Raumlicht

Zwei Platten aus 20 mm starkem gegossenen Acrylglas wurden T-förmig mit V-Naht verklebt wie oben beschrieben. Zur Aushärtung wurden keine Leuchtstoff-Lampen verwendet. Die Aushärtung erfolgt vielmehr in normalem Tageslicht (diffuses Raumlicht).

| Kleber von Beispiel | Härtezeit (min) | Festigkeit der Verklebung im Handversuch |
|---|---|---|
| 1 | 160 | sehr gut, Kohäsionsbruch |
| 2 | 100 | sehr gut, Kohäsionsbruch |
| Vergleich 6 | keine Aushärtung | |

## Patentansprüche

1. Lichthärtender Polymerisationsklebstoff für Acrylglas, bestehend aus einer Lösung eines mit vorwiegend aus Methylmethacrylat aufgebauten Polymeren in polymerisierbarem Monomeren, das im wesentlichen Methylmethacrylat ist,
dadurch gekennzeichnet,
daß der Anteil des Methylmethacrylat-Polymeren zwischen 20 - 60 Gew.-% bezogen auf das Gewicht des Klebmittels liegt, der Anteil des Methylmethacrylat-Polymeren zusammen mit flüssigem, monomeren Methylmethacrylat am Klebmittel wenigstens 80 Gew.-% ausmacht, und das Klebmittel bis 7 Gew.-% eines vernetzenden mehrfunktionellen Monomeren enthält und
zur Photopolymerisationsauslösung eine Kombination mindestens eines Tageslicht-Photoinitiators in Mengen von 0,01 bis 10 Gew.-%, der mindestens eine Absorptionsbande im Wellenlängenbereich von 340 - 500 nm aufweist, und eines Photoinitiators II enthält, der mindestens eine Absorptionsbande im selben Wellenlängenbereich aufweist, wobei die Absorptionsmaxima der Absorptionsbanden der beiden Photoinitiatoren in diesem Wellenlängenbereich bei verschiedenen Wellenlängen liegen.

2. Lichthärtender Polymerisationsklebstoff nach Anspruch 1, dadurch gekennzeichnet, daß er in Mengen von 0,01 bis 1 Gew.-% wenigstens einen Tageslichtinitiator enthält.

3. Lichthärtender Polymerisationsklebstoff nach Anspruch 1 oder 2, dadurch gekennzeichnet, daß er einen Tageslicht-Photoinitiator aus der Stoffklasse der Benzoyldiphenylphosphinoxide enthält.

4. Lichhärtender Polymerisationsklebstoff nach einem oder mehreren der Ansprüche 1 bis 3, dadurch gekennzeichnet, daß er als Tageslicht-Photoinitiator 2, 4,6-Trimethylbenzoyl-diphenylphosphinoxid und/oder 2, 3-Bornandion (Campherchinon) enthält.

5. Lichthärtender Polymerisationsklebstoff, nach einem oder mehreren der Ansprüche 1 bis 4, dadurch gekennzeichnet, daß er als Photoinitiator II Diisopropylxanthogendisulfid enthält.

6. Verfahren zum Verkleben eines Formkörpers aus Acrylkunststoff mit einem anderen Formkörper aus Kunststoff durch Aushärten einer Schicht des Klebmittels, die mit den zu verklebenden Formkörpern in Berührung steht, unter der Einwirkung einer Strahlung, für die wenigstens einer der Formkörper durchlässig ist und die auf den Photoinitiator aktivierend wirkt, dadurch gekennzeichnet, daß das Klebmittel nach Anspruch 1, 2, 3, 4, oder 5 eingesetzt wird.

7. Verfahren nach Anspruch 6, dadurch gekennzeichnet, daß Formkörper aus Acrylkunststoff miteinander verklebt werden.

## Claims

1. A light-hardening polymerisation adhesive for acrylic glass, comprising a solution of a polymer mainly synthesised from methylmethacrylate in a polymerisable monomer which is mainly methylmethacrylate, characterised in that the proportion of methyl methacrylate polymers is 20-60 wt.-%, based on the weight of the adhesive, the proportion of methyl methacrylate polymers together with fluid, monomeric methyl methacrylate in the adhesive is at least 80 wt.-% and the adhesive contains up to 7 wt.-% of a crosslinking polyfunctional monomer, and in order to initiate photopolymerisation, the adhesive comprises a combination of at least one daylight-photoinitiator, in amounts of 0.01 to 10 wt.-%, which has at least one absorption band within the wavelength range of 340 - 500 nm, and one photoinitiator II which has at least one absorption band in the same wavelength range, the absorption bands of the two photoinitiators being at different wavelengths within this wavelength range.

2. A light-hardening polymerisation adhesive according to claim 1, characterised in that it comprises at least one daylight-photoinitiator in amounts of 0.01 to 1 wt.-%.

3. A light-hardening polymerisation adhesive according to claim 1 or 2, characterised in that it comprises a daylight-photoinitiator from the benzoyldiphenylphosphine oxide class.

4. A light-hardening polymerisation adhesive according to one or more of claims 1 to 3, characterised in that it contains 2,4,6-trimethylbenzoyl-diphenylphosphine oxide and/or 2,3-bornanedione (camphorquinone) as the daylight-photoinitiator.

5. A light-hardening polymerisation adhesive according to one or more of claims 1 to 4, characterised in that it comprises diisopropylxanthogene disulphide as the photoinitiator II.

6. A process for bonding a moulded article made of acrylic plastic material with another moulded article made of plastic material, in which a layer of adhesive, which is in contact with the moulded articles to be bonded, is hardened under the effect of radiation, in respect of which at least one of the moulded articles is transmissive and which leads to an activating effect on at least one of the photoinitiators, characterised in that the adhesive used is an adhesive according to claim 1, 2, 3, 4 or 5.

7. A process according to claim 7, characterised in that moulded articles made of acrylic plastic material are bonded to one another.

## Revendications

1. Colle polymérisable durcissant à la lumière pour verre acrylique, se composant d'une solution d'un polymère formé principalement de méthacrylate de méthyle dans un monomère polymérisable qui est essentiellement du méthacrylate de méthyle, caractérisée en ce que la proportion du polymère de méthacrylate de méthyle est comprise entre 20 et 60% en poids, par rapport au poids de la colle, la proportion du polymère de méthacrylate de méthyle et du méthacrylate de méthyle monomère et liquide dans la colle s'élève au moins à 80% en poids, et la colle contient jusqu'à 7% en poids d'un monomère multifonctionnel réticulant, et contient pour le déclenchement de la photopolymérisation, une combinaison d'au moins un photo-amorceur à la lumière du jour dans des proportions de 0,01 à 10% en poids, qui présente au moins une bande d'absorption dans la gamme de longueurs d'onde de 340 à 500 nm, et d'un photo-amorceur II qui présente au moins une bande d'absorption dans la même gamme de longueurs d'onde, les maximums d'absorption des bandes d'absorption des deux photo-amorceurs se situant à des longueurs d'onde différentes dans cette gamme de longueurs d'onde.

2. Colle polymérisable durcissant à la lumière selon la revendication 1, caractérisée en ce qu'elle contient au moins un amorceur à la lumière du jour dans des proportions de 0,01 à 1% en poids.

3. Colle polymérisable durcissant à la lumière selon la revendication 1 ou 2, caractérisée en ce qu'elle contient un photo-amorceur à la lumière du jour de la classe de substances des oxydes de benzoyldiphénylphosphine.

4. Colle polymérisable durcissant à la lumière selon l'une quelconque des revendications 1 à 3, caractérisée en ce qu'elle contient, comme photo-amorceur à la lumière du jour, de l'oxyde de 2,4,6-triméthylbenzoyldiphénylphosphine et/ou de la 2,3-bornanedione (camphoquinone).

5. Colle polymérisable durcissant à la lumière selon l'une quelconque des revendications 1 à 4, caractérisée en ca qu'elle contient, comme photo-amorceur II, du disulfure de diisopropylxanthogène.

6. Procédé de collage d'un corps moulé en matière plastique acrylique avec un autre corps moulé en matière plastique, par durcissement d'une couche de la colle, qui est en contact avec les corps moulés à coller, sous l'action d'un rayonnement auquel l'un au moins des corps moulés est perméable et qui a une action d'activation sur le photo-amorceur, caractérisé en ce que l'on utilise la colle selon l'une quelconque des revendications 1, 2, 3, 4 ou 5.

7. Procédé selon la revendication 6, caractérisé en ce que des corps moulés en matière plastique acrylique sont collés entre eux.
